# EUROPÄISCHE PATENTSCHRIFT

(11) **EP 1 110 885 B1**
(45) Veröffentlichungstag und Bekanntmachung des Hinweises auf die Patenterteilung: **15.02.2006**
(21) Anmeldenummer: 00127145.1
(22) Anmeldetag: 12.12.2000
(51) Int. Cl.: B65G 53/46

(54) **Zellenradschleuse mit verbesserter Abdichtung gegen Leckluft**
Cellular rotary valve with improved sealing against air leakage
Vanne à roue cellulaire avec étanchéité améliorée contre les fuites d'air

(30) Priorität: 14.12.1999 DE 19960221
(43) Veröffentlichungstag der Anmeldung: 27.06.2001
(73) Patentinhaber: MOTAN Materials Handling GmbH, 88250 Weingarten (DE)
(72) Erfinder: HEEP, Michael, D-88250 Weingarten (DE); HEEP, Dieter, D-88368 Bergatreute (DE)
(74) Vertreter: Riebling, Peter

(56) Entgegenhaltungen:
- DE-C- 920 873
- US-A- 3 130 879

## Beschreibung

Die Erfindung betrifft eine Zellenradschleuse mit verbesserter Abdichtung nach dem Oberbegriff des Anspruchs 1 oder 2.

Zellenradschleusen werden meistens zum Einschleusen von Schüttgut in pneumatische Förderanlagen benutzt. Den vielen Vorteilen ihrer Benutzung steht der gravierende Nachteil der Leckluft gegenüber, die durch die notwendigen Spalte zwischen Zellenrad (Rotor) und Gehäuse entsteht. Insbesondere bei der Dichtstromförderung mit herabgesetzter Geschwindigkeit treten ungünstige Verhältnisse von Förderluftmenge und Leckluftmenge auf.

Für die Konstruktion von Zellenradschleusen gilt die alte Regel: Mindestens 2 Stege im Eingriff mit dem Gehäuse zu Abdichtungszwecken, dann Anordnung der Kammerentlüftungsöffnung. Die Gehäuse- bzw. Zellenraddurchmesser sind von 160 bis 1000 mm nach ISO 3922 standardisiert. Als Standard für Zellenräder haben sich 10 Kammern durchgesetzt.

Bei der Einhaltung dieser Regel wird klar, daß für optimale Ein- und Auslaufdurchmesser nicht mehr viele Möglichkeiten verbleiben.

In der DE 40 38 236 A1 wird dieses Dilemma ausführlich beschrieben. Die Druckschrift schlägt einen notgedrungenen Kompromiss von 12 Kammern als Problemlösung vor, um bei günstiger Abdichtung gegen Leckluft noch einen zufriedenstellenden Ein- und Auslaufquerschnitt zu erhalten und nur wenig Kammervolumen einzubüßen.

Die DE 39 10 617 A1 zeigt eine Zellenradschleuse, deren Zellenstegenden mit Abdeckleisten versehen sind diese sind im rechten Winkel zum Zellensteg angeordnet und mit einem Radius versehen, der dem Gehäuseradius entspricht. Sie dienen in Verbindung mit einem Pflugscharabstreifer zur Verhinderung der gefürchteten Granulateinklemmung. Leider wird dadurch die Kammerbefüllung bzw. -entleerung wesentlich eingeschränkt und damit das nutzbare Kammervolumen gemindert.

Die US-A-3,130,879 offenbart eine Zellenradschleuse, bevorzugt zum Transport von Lebensmitteln, wie zum Beispiel Chips oder anderem faserförmigem Material, zur Einführung in einen Koch- oder Verarbeitungsapparat. Diese Zellenradschleuse beinhaltet ein aus einem Aluminium-Formkörper bestehendes Scheibenrad, welches unterschiedlich tiefe Taschen ausbildet. Die Herstellung eines derartigen Aluminium-Formkörpers erfolgt durch einen Gussvorgang und es bedarf einer aufwändigen Nachbearbeitung, um ein solches Rad funktionsgerecht in das Gehäuse der Zellenradschleuse zu integrieren. Diese Zellenradschleuse ist demzufolge kostenintensiv in Montage, Wartung und Reparatur.

Der Erfindung liegt die Aufgabe zugrunde, eine Zellenradschleuse der einleitend angegebenen Gattung zu schaffen, bei der durch entsprechend konstruktive Maßnahmen die Abdichtung verbessert wird ohne daß dies auf Kosten verkleinerter Ein- und Auslaufdurchmesser oder verminderter Kammervolumina erfolgt. Weiterhin soll die Zellenradschleuse kostengünstig in Montage, Wartung und Reparatur sein.

Diese Aufgaben sind erfindungsgemäß durch die im Patentanspruch 1 oder 2 angegebenen Merkmale gelöst.

Erstaunlicher Weise hat sich herausgestellt, daß man die Abdichtwirkung durch eine größere Steganzahl erhöhen kann, wenn man die zusätzlichen Stege nicht mehr an der Zellenradwelle befestigt, sondern am Hauptsteg, welcher seinerseits mit der Welle verbunden ist.

Durch diese konstruktive Lösung entsteht eine Verdoppelung (oder sogar Vervielfachung) der Steg- und Kammeranzahl, wobei sich im Wechsel große und kleine Kammern bilden. Die Winkel der Stege sind vorteilhaft so gewählt, daß sie zur Kammermittellinie parallel verlaufen.

Das Wesen der Erfindung liegt nun darin, daß radial außen an den jeweiligen radial inneren Stegabschnitten bzw. Stegen (Hauptstegen) eines Zellenrades nun weitere, radial auswärts gerichtete U-Profile bzw. zusätzliche Stege angesetzt sind, welche zusätzliche nach außen offene Nebenkammern bilden, welche mit dem Fördermaterial befüllbar sind.

Durch diese Anordnung ergibt sich die Ausbildung einer Hauptkammer, welche im wesentlichen durch die Hauptstege des Zellenrades gebildet wird, die sich radial einwärts bis auf die Welle erstreckt und zusätzliche, außen anschließende und neben der Hauptkammer befindliche und gleichmäßig am Umfang verteilt angeordnete Nebenkammern, welche ebenfalls zur Aufnahme des Förderstroms geeignet sind.

Die Erfindung definiert also ein Zellenrad mit unterschiedlichen Kammervolumina, wobei neben gleichmäßig am Umfang verteilt angeordneten Hauptkammern auch entsprechende radial auswärts gerichtete Nebenkammern vorgesehen sind. Weil die Nebenkammern mit ihren radial auswärts gerichteten Stegen abdichtend an der Gehäuseinnenwand entlang laufen, ergibt sich ein verbesserter Abdichtungseffekt gegen Leckluft.

Bei optimaler Abdichtung gegen Leckluft können so wesentlich geringere Steganzahlen von Hauptstegen zur Ausbildung von Hauptkammern als beim Stand der Technik verwendet werden. Aus der eingangs genannten DE 40 38 236 A1 war eine relativ gute Abdichtung zu entnehmen, wobei allerdings insgesamt 12 Stege zur Bildung von 12 Hauptkammern notwendig waren.

Hier setzt die Erfindung ein, die - verglichen mit diesem Beispiel - lediglich nur noch 8 Stege vorsieht, wobei die 8 Stege 8 Hauptkammern und radial auswärts gerichtete und auswärts geöffnete, weitere 8 Nebenkammern ausbilden. Damit ergibt sich nämlich der Vorteil, daß nun insgesamt mit den 8 Hauptstegen und den 8 Nebenstegen insgesamt 16 Stege zur Abdichtung des Zellenrades beitragen wobei aber das Kammervolumen nicht wesentlich gemindert wird, weil ja die Nebenkammern ebenfalls befüllbar sind.

D.h. also bei wesentlich verbesserter Abdichtung gegenüber der DE 40 38 236 A1 können geringere Herstellungskosten, eine einfachere Herstellung und eine verbesserte Abdichtung gewährleistet werden.

Die Erfindung sieht also im Ergebnis vor, daß sich radial auswärts an den jeweiligen Steg der Hauptkammer jeweils mindestens eine Nebenkammer anschließt, die aus weiteren Teilstegen gebildet wird.

Sind bspw. diese Nebenkammern durch ein Y-förmiges Profil gebildet, dann hat sich gezeigt, daß aufgrund dieses Profils eine Verbesserung der Abdichtwirkung gegen Leckluft erzielt werden kann. Die radial auswärts gerichteten, mit geringem Bewegungsspiel am Gehäuse vorbeilaufenden Enden dieser Y-Schenkel erzeugen nämlich mit der vorbei strömenden Leckluft Wirbelschleppen, welche in die jeweils gegenüber der Hauptkammer abgedichtete Nebenkammer eingreifen, dort eine Druckänderung hervorrufen und daher eine zusätzliche Abdichtung gegen Leckluft bilden. Es werden also sozusagen Luftpolster an diesen Stegenden der Nebenkammern gebildet, die ein ungehindertes Abströmen der Leckluft behindern. Selbstverständlich gilt dieser Effekt für alle Profilformen von Stegen und Steganzahlen, mit denen eine Nebenkammer gebildet sein kann.

Die Ausbildung der Nebenkammern hat also nicht nur den Vorteil, daß die Nebenkammern zusätzlich noch mit dem Fördergut gefüllt werden können, sondern Sie dienen auch der verbesserten Abdichtung gegen Leckluft auf der hochdrehenden Seite, d.h. also wenn die Kammern nicht mit dem Fördergut gefüllt sind, sondern mit Druckgas.

Die Erfindung sieht hierbei zwei unterschiedliche Ausführungen vor:
Die erste Ausführung bezieht sich darauf, daß die Nebenkammer druckdicht gegen die Hauptkammer abgedichtet ist. Die andere Ausführung bezieht sich darauf, daß zwischen der jeweiligen Haupt- und der Nebenkammer eine gasleitende und/oder förderstromleitende Verbindung besteht.

Ein weiterer Vorteil des erfindungsgemässen Zellenrades ist, daß es leicht gegen die herkömmlichen Zellenräder austauschbar ist, weil ja nur das Zellenrad insgesamt ausgetauscht werden muß und hierbei eine wesentlich bessere Abdichtung gegen Leckluft gewährleistet ist. Je nach der Gehäuseform kann es daher von Vorteil sein, 5, 6, 8 oder 10 Stege einzusetzen (also Hauptstege) die aufgrund der auswärts gerichteten Nebenkammern verdoppelt (oder sogar vervielfacht) angeordnet sind.

Die Erfindung ist also nicht auf die Anzahl der Hauptstege beschränkt, sondern es kommt nur darauf an, daß an jedem Hauptsteg radial auswärts gerichtet Nebenstege angeordnet sind, welche nach außen geöffnete Nebenkammern bilden.

Hierbei ist es im übrigen auch nicht lösungsnotwendig, daß jede Nebenkammer durch zwei voneinander im Abstand angeordnete Teilstege oder Kurzstege getrennt ist; es können auch an jedem Hauptsteg mehr als eine, z.B. zwei, drei oder mehrere Nebenkammer angesetzt werden.

In einer weiteren Ausführungsform der Erfindung ist vorgesehen, daß ein sogenanntes offenes Zellenrad verwirklicht wird. Bei dieser offenen Ausführung ist die jeweilige Hauptkammer der Zellenradschleuse stirnseitig nicht durch eine Seitenscheibe begrenzt. Vielmehr ist bei dieser Ausführungsform die Seitenscheibe in ihrem Durchmesser derart verringert, daß sich an den Stirnseiten der Hauptkammer Öffnungen in Richtung zur (nicht mehr vorhandenen) Seitenscheibe ergeben.

Es findet in diesem Bereich also keine Abdichtung mehr statt.

Die eigentliche Abdichtung erfolgt hierbei durch mehrere stirnseitig am Umfang des Zellenrades angeordnete Profile, die Profilschenkel bilden, welche axial auswärts gerichtet sind.

Diese Profilschenkel berühren oder sind mit geringem Abstand vor dem gehäuseseitigen Deckel angeordnet und bilden so die Abdichtungen aus.

Selbstverständlich können diese Profile, die bevorzugt aus U-Profilen bestehen, in mannigfaltiger Weise verändert werden.

In einer bevorzugten Ausführungsform werden als Profile U-Profile verwendet, wobei die beiden U-Schenkel gegen die ortsfeste Gehäusewandung jeweils gerichtet sind und dort den Dichtungsspalt ausbilden.

Statt eines U-Profils können jedoch auch andere Profilquerschnitte verwendet werden, wie z.B. ein Trapezprofil, ein Halbrundprofil oder andere Profile mehr.

Ebenso ist das Material für die Wahl der U-Schenkel völlig offen. Es kann ein Metallmaterial verwendet werden, ebenso auch ein Kunststoffmaterial.

Darüber hinaus können noch zusätzliche Dichtleisten im Zwischenraum zwischen den Profilstegen und der ortsfesten Gehäusewand vorgesehen werden, wie z.B. Bürstendichtungen, Lippendichtungen, Verschleißleisten und dgl. mehr.

Wichtig bei diesem Ausführungsbeispiel ist, daß nach der technischen Lehre des Anspruches 1 das Zellenrad wieder in Nebenkammern und Hauptkammern unterteilt ist. Es wird allerdings ein offenes Zellenrad vorgeschlagen.

Für diese Ausführungsform gelten daher alle vorher genannten Merkmale des erst genannten Ausführungsbeispieles.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert eine erste Ausführungsform eines Zellenrades in perspektivischer Seitenansicht
- Figur 2:: Schnitt durch ein Zellenrad
- Figur 3:: Eine zweite Ausführungsform eines Zellenrades im Schnitt
- Figur 4:: Seitenansicht auf das Zellenrad nach Figur 3
- Figur 5:: Abgewandeltes Ausführungsbeispiel für eine Stegkonfiguration
- Figur 6:: Ein zweites Ausführungsbeispiel einer Stegkonfiguration
- Figur 7:: Ein drittes Ausführungsbeispiel einer Stegkonfiguration
- Figur 8:: Ein viertes Ausführungsbeispiel einer Stegkonfiguration
- Figur 9:: Perspektivische Seitenansicht einer einzige Zellenwand eines Zellenrades in einer anderen Ausgestaltung
- Figur 10:: Das Zellenrad nach Figur 9 in Stimansicht

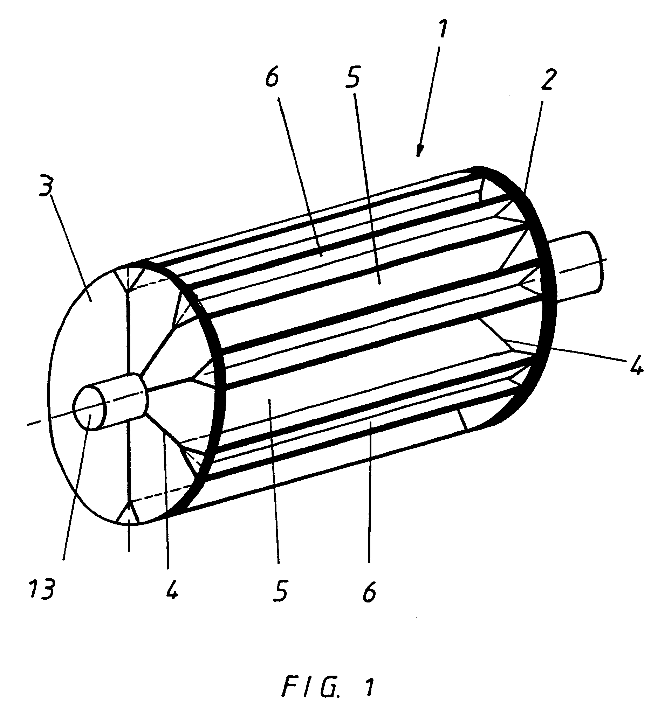

In Figur 1 ist allgemein ein Zellenrad 1 dargestellt, welches in an sich bekannter Weise in einem Zellenradgehäuse abgedichtet läuft, so wie es bspw. in der DE 40 38 236 A1 beschrieben ist, deren Offenbarungsgehalt voll inhaltlich zum Gegenstand der vorliegenden Erfindung gemacht wird.

Das Zellenrad besteht aus zwei parallelen und einen gegenseitigen Abstand zueinander einnehmenden Seitenscheiben 2, 3 die durch eine gemeinsame, durchgreifende Welle 13 miteinander verbunden sind.

Selbstverständlich ist die Erfindung nicht auf die Ausbildung eines Zellenrades 1 mit Seitenscheiben 2, 3 beschränkt. Es können die Seitenscheiben 2, 3 auch vollständig entfallen und jeweils eine stimseitige Abdichtung über die Stirnseiten der Stege an der Gehäusewandung erfolgen.

Wichtig ist, daß im Zellenrad 1 nun von der Welle 13 ausgehende Stege 4 angeordnet sind, die auch als Hauptstege bezeichnet werden können. Diese Stege bilden mit ihren benachbarten Wänden jeweils Hauptkammern 5 in dem Zellenrad 1 und sind radial auswärts gerichtet durch entsprechende Kurzstege 7 voneinander verzweigt, die dann Nebenkammern 6 bilden.

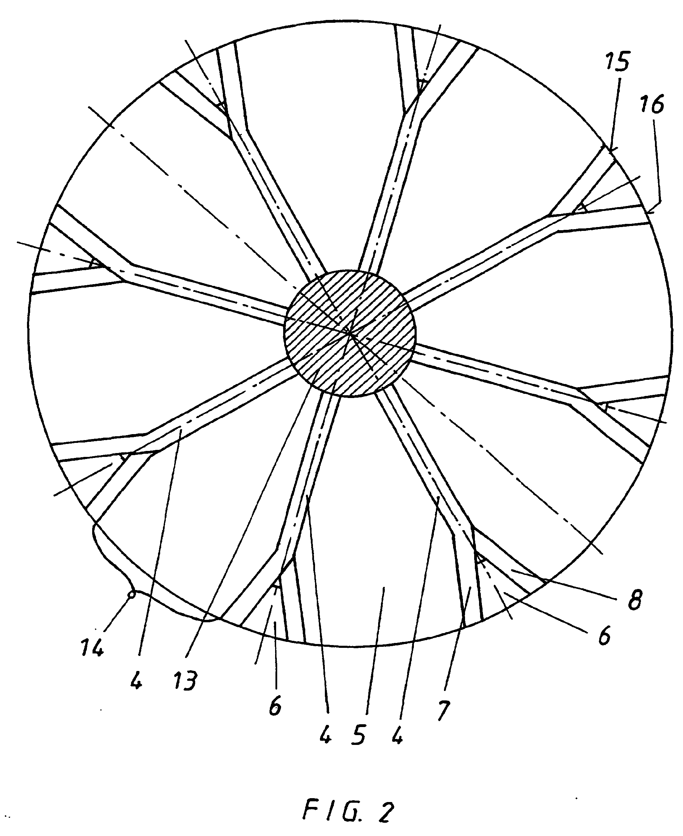

Weitere Einzelheiten ergeben sich aus Figur 2.

Dort ist erkennbar, daß die Hauptstege 4 sich etwa 2/3 des Radius des Gesamtzellenrades nach außen hin erstrecken und dort in Kurzstege 7, 8 übergehen, wobei hierbei nach außen geöffnete Nebenkammern 6 gebildet werden.

Das Größenverhältnis zwischen dem Volumen der Hauptkammer 5 und der Nebenkammer 6 wird allein durch die Art des Schüttgutes bestimmt. Wichtig ist auch, daß die radial auswärts gerichteten Nebenkammern 6 die Einlaufbreite 14 der jeweiligen Hauptkammer 5 nicht wesentlich beeinträchtigen,

Im gezeigten Ausführungsbeispiel besteht die linke Kammerwandung der Nebenkammer 6 jeweils aus dem Kurzsteg 7, der aus dem Hauptsteg 4 durch eine Abbiegung heraus gearbeitet ist. An dieses abgebogene Profil wird hierbei ein Teilprofil 8 angeschweißt.

Es ergeben sich damit etwa V-förmig nach außen geöffnete Nebenkammern 6.

Die Abdichtung des Zellenrades 1 zu dem nicht näher dargestellten Gehäuse erfolgt nun über die Stirnkanten 15,16 der Profile 7, 8, was eine Verdoppelung des Dichtungsprofils im Vergleich zu einem Hauptsteg führt, der nach dem Stand der Technik direkt an der Gehäuseinnenwandung des Zellenradgehäuses entlang lief.

In der allgemeinen Beschreibung wurde auch noch dargestellt, daß sich an den Stirnkanten 15, 16 in Richtung zur Innenwandung des Gehäuses Wirbelschleppen bilden, die noch eine zusätzliche verbesserte Abdichtung ergeben, weil diese Wirbelschleppen auch den Druck in der Nebenkammer 6 beeinflussen. Die Wirbelschleppen werden nämlich in die Nebenkammer 6 eingetragen und verbleiben dort während der Aufwärtsdrehung des Zellenrades, was zu einer verbesserten Abdichtung führt.

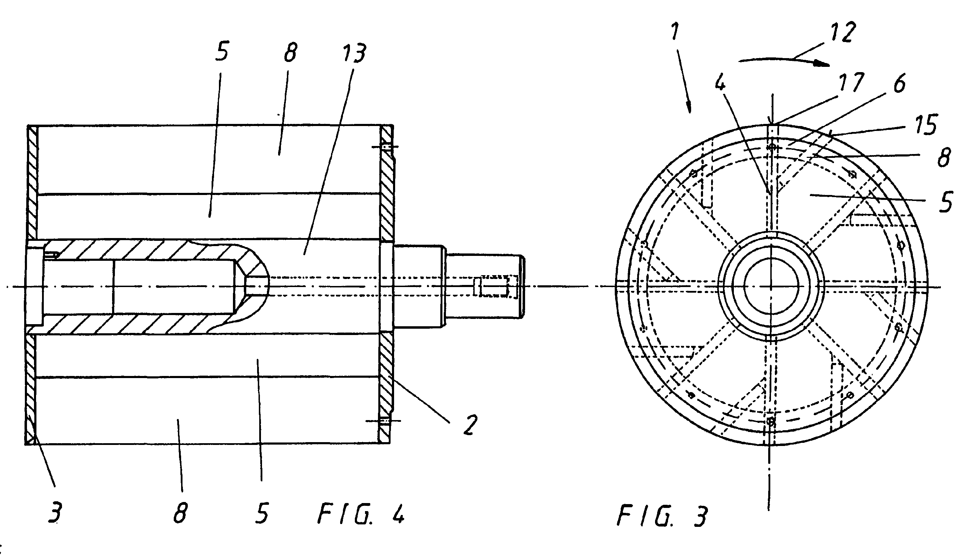

In Figur 3 ist eine weitere Ausgestaltung eines Zellenrades 1 dargestellt, wo asymmetrische Nebenkammern dargestellt sind. Hier erstrecken sich die Stege 4 bis an die Zellenradwandung mit ihren Stirnkanten 17 und es sind hierbei schräg angesetzte Teilprofile 8 angeschweißt, welche ebenfalls mit ihren Stirnkanten 15 die weitere Abdichtung bilden.

Zwischen den beiden Stirnkanten 15, 17 ist dann wiederum jeweils eine Nebenkammer 6 definiert.

Die Figur 4 zeigt die Seitenansicht dieses Zellenrades, wo erkennbar ist, daß die Nebenkammern 6 sich über die gesamte Länge des Zellenrades erstrecken und nirgends unterbrochen sind.

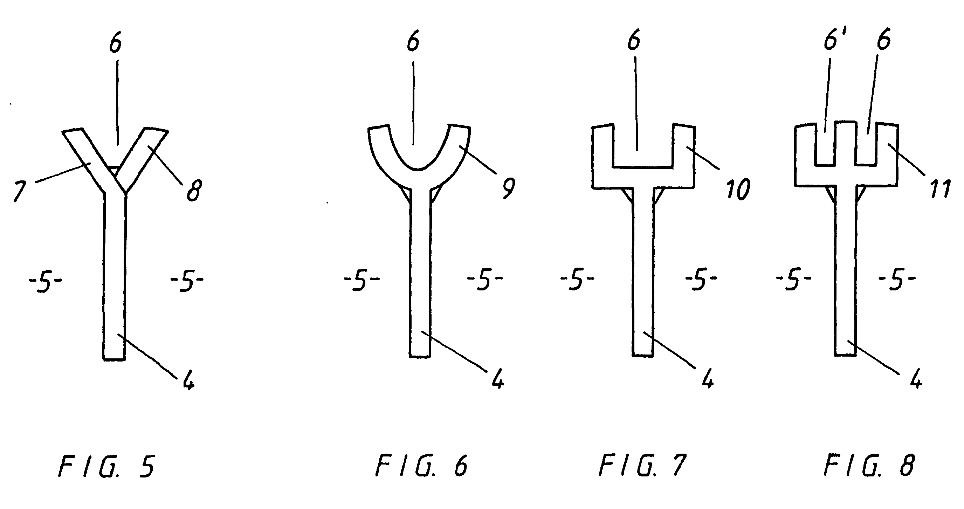

Die Figuren 5 bis 8 zeigen weitere Ausführungsbeispiele für die Ausbildung der Profilform der Nebenkammern.

Die Figur 5 zeigt - ähnlich wie Figur 2 -, daß aus dem Profil des Hauptsteges 4 der Kurzsteg 7 herausgebogen ist und die Nebenkammer durch ein weiteres, schräg angesetztes Teilprofil gebildet ist.

Figur 6 zeigt, daß ein U-förmiges Profil durch einen gebogenen Kurzsteg 9 erreicht werden kann, der auf den Hauptsteg aufgeschweißt ist.

Gleichfalls zeigt die Figur 7 daß ein solcher Kurzsteg 10 auch rechteckförmig oder quadratisch im Profil ausgebildet sein kann und Figur 8 zeigt, daß der Kurzsteg 11 auch mehrere Nebenkammern 6, 6' ausbilden kann.

Insgesamt ergibt sich also mindestens eine Verdoppelung der Dichtkanten der jeweiligen Zellenradstege zu den zugeordneten Gehäusewandungen des Zellenradgehäuses.

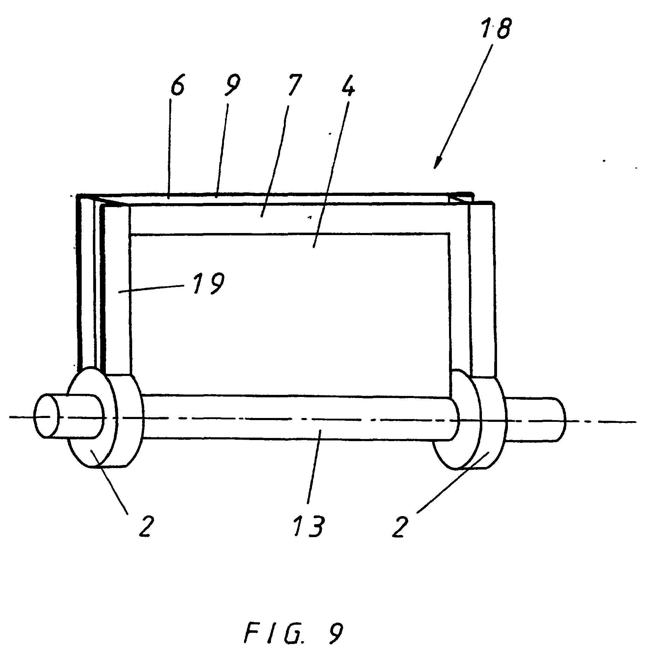

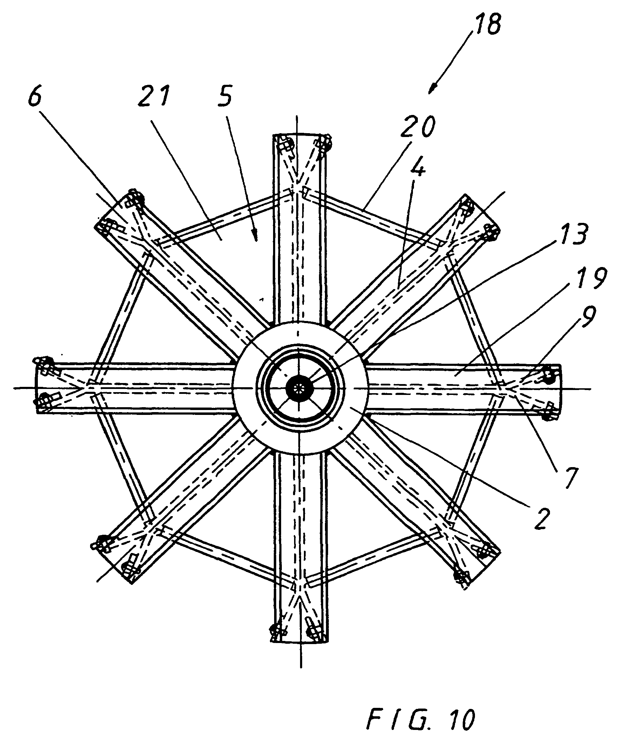

In Figur 9 und 10 ist als weiteres Ausführungsbeispiel ein sogenanntes offenes Zellenrad 18 dargestellt.

Diese unterscheidet sich von dem Zellenrad 1 der erst beschriebenen Ausführungsform dadurch, daß es an einer abdichtenden Seitenscheibe fehlt. Vielmehr ist hier die Hauptkammer 5 gebildet durch die einzelnen Stege 4, welche die Hauptkammer links und rechts radial begrenzen. Stirnseitig ist die Hauptkammer 5 jedoch jeweils durch Öffnungen 21 in axialer Richtung geöffnet.

Die eigentliche stimseitige Abdichtung jeder Hauptkammer 5 erfolgt hierbei in Richtung zu dem gehäusefesten Deckel dadurch, daß jede Hauptkammer stirnseitig jeweils ein Profil 19 aufweist, welches bevorzugt als U-Profil ausgebildet ist.

Die Profilschenkel dieses U-Profils 19 sind gegen die gehäusefeste Wandung der Zellenradschleuse gerichtet und bilden dort nicht näher dargestellte Dichtungsspalte aus.

Es werden wiederum wie bei dem erst beschriebenen Ausführungsbeispiel radial auswärts der Hauptkammer 5 eine Vielzahl von Nebenkammern 6 gebildet, die jeweils durch die vorher beschriebenen Kurzstege 7, 9 gebildet.

Selbstverständlich gelten alle Ausführungsformen, die anhand der Figuren 1 bis 8 erläutert wurden auch für dieses Ausführungsbeispiel.

Mit diesem Ausführungsbeispiel soll also lediglich gezeigt werden, daß es neben einem geschlossenen Zellenrad nach den Zeichnungsfiguren 1 bis 8 auch ein offenes Zellenrad 18 gibt, welches stirnseitig durch Öffnungen 21 definiert ist.

Zur gegenseitigen Abstützung (in Umfangsrichtung) der Profile 19 sind im übrigen Stützbolzen 20 verwendet, welche diese Profile 19 gegen Verbiegung schützen.

Vorteil diese Ausführung ist, daß bei sehr feinkörnigen Produkten nicht mehr für das Produkt die Möglichkeit besteht, sich zwischen einer stimseitigen Seitenscheibe eines Zellenrades und der zugeordneten Gehäusewandung abzulagern und dort zu Störungen zu führen.

Bei brennbaren Produkten kann dies sogar soweit gehen, daß die Produkte sich in diesem Zwischenraum durch Reibungshitze entzünden und zu schweren Beschädigungen der Zellenradschleuse führen.

Durch diese hier vorgeschlagene offene Ausführungsform wird die Abdichtung direkt an der ortsfesten Wandung des Zellenradschleusengehäuses erreicht, so daß sich in diesem Zwischenraum keine Produkte mehr ablagern können.

### Zeichnungslegende

- 1.: Zellenrad
- 2.: Seitenscheibe
- 3.: Seitenscheibe
- 4.: Steg
- 5.: Hauptkammer
- 6.: Nebenkammer
- 7.: Kurzsteg
- 8.: zusätzlicher Steg
- 9.: U-Profil
- 10.: U-Profil
- 11.: U-Profil
- 12.: Drehrichtung
- 13.: Welle
- 14.: Einlaufbreite
- 15.: Stirnkante
- 16.: Stirnkante
- 17.: Stirnkante
- 18.: Zellenrad
- 19.: Profil
- 20.: Stützbolzen
- 21.: Öffnung

## Patentansprüche

1. Zellenradschleuse mit verbesserter Abdichtung gegen Leckluft mit einem in einem Gehäuse drehend gelagerten Zellenrad (1, 18), welches von einer zentralen Welle (13) ausgehende, radial sich nach außen erstreckende Stege (4) aufweist, welche zwischen sich Kammern (5) für die Aufnahme des Fördergutes bilden, und mit ihren radial äußeren Enden nächst der Innenseite der Gehäusewand eine Abdichtung gegen Leckluft bilden, wobei zusätzliche Stege (8) mit den Stegen (4) verbunden sind, welche in Richtung auf das Gehäuse radial nach außen geöffnete Nebenkammern (6) bilden, **dadurch gekennzeichnet, daß** die Nebenkammer (6) aus einem Kurzsteg (7) des Steges (4) und dem daran im Winkel angesetzten zusätzlichen Steg (8) besteht.

2. Zellenradschleuse mit verbesserter Abdichtung gegen Leckluft mit einem in einem Gehäuse drehend gelagerten Zellenrad (1, 18), welches von einer zentralen Welle (13) ausgehende, radial sich nach außen erstreckende innere Stegabschnitte (4) aufweist, welche zwischen sich Kammern (5) für die Aufnahme des Fördergutes bilden, wobei zusätzliche Stege (10, 11) mit den inneren Stegabschnitten (4) verbunden sind, wobei die zusätzlichen Stege (10, 11) in Richtung auf das Gehäuse radial nach außen geöffnete Nebenkammern (6) bilden und mit ihren radial äußeren Enden nächst der Innenseite der Gehäusewand eine Abdichtung gegen Leckluft bilden, **dadurch gekennzeichnet, daß** die Nebenkammer (6) aus einem etwa rechteckförmigen oder quadratischen U-Profil der zusätzlichen Stege (10, 11) gebildet ist.

3. Zellenradschleuse nach Anspruch 2, **dadurch gekennzeichnet, daß** mehrere Nebenkammern (6, 6') aus einem mehrzinkigen U-Profil (11) gebildet sind.

4. Zellenradschleuse nach einem der Ansprüche 1 bis 3, **dadurch gekennzeichnet, daß** die Nebenkammern (6) mit dem Fördermaterial befüllbar sind.

5. Zellenradschleuse nach einem der Ansprüche 1 bis 4, **dadurch gekennzeichnet, daß** das Zellenrad (1, 18) unterschiedliche Kammervolumina der Haupt- (5) und der Nebenkammern (6) ausbildet.

6. Zellenradschleuse nach Anspruch 5, **dadurch gekennzeichnet, daß** die Kammervolumina von Haupt- und Nebenkammer (5, 6) gegeneinander abgedichtet sind.

7. Zellenradschleuse nach einem der Ansprüche 1 bis 6, **dadurch gekennzeichnet, daß** das Zellenrad (1) stirnseitig durch jeweils eine Seitenscheibe (2) abgedichtet ist.

## Claims

1. Star feeder with improved sealing against air leakage, with a star wheel (1, 18) which is mounted rotatably in a casing and has webs (4) extending radially outwards from a central shaft (13) and forming between them chambers (5) for receiving conveyed material and forming by their radially outer ends adjacent to the inside of the casing wall a seal against air leakage, wherein additional webs (8) forming secondary chambers (6) opening radially outwards towards the casing are joined to the webs (4), **characterized in that** the secondary chamber (6) consists of a short leg (7) of the web (4) and the additional web (8) set at an angle thereto.

2. Star feeder with improved sealing against air leakage, with a star wheel (1, 18) which is mounted rotatably in a casing and has inner web portions (4) extending radially outwards from a central shaft (13) and forming between them chambers (5) for receiving conveyed material, wherein additional webs (10, 11) are joined to the inner web portions (4), these additional webs (10, 11) forming secondary chambers (6) opening radially outwards towards the casing and forming by their radially outer ends adjacent to the inside of the casing wall a seal against air leakage, **characterized in that** the secondary chamber (6) is formed by an approximately rectangular or square channel section of the additional webs (10, 11).

3. Star feeder according to Claim 2, **characterized in that** a plurality of secondary chambers (6, 6') are formed by a multipronged channel section (11).

4. Star feeder according to any one of Claims 1 to 3, **characterized in that** the secondary chambers (6) are fillable with conveyed material.

5. Star feeder according to any one of Claims 1 to 4, **characterized in that** different chamber volumes are formed by the primary chambers (5) and secondary chambers (6) of the star wheel (1, 18).

6. Star feeder according to Claim 5, **characterized in that** the chamber volumes of the primary and secondary chambers (5, 6) are closed off from one another.

7. Star feeder according to any one of Claims 1 to 6, **characterized in that** the star wheel (1) is closed off by a cheek plate (2) at each end.

## Revendications

1. Vanne à roue cellulaire avec une étanchéité améliorée contre les fuites d'air, avec une roue cellulaire (1, 18) montée en rotation dans un carter et comportant des ailettes (4) qui partent d'un arbre central (13), qui s'étendent radialement vers l'extérieur, qui forment entre elles des chambres (5) destinées à recevoir le produit à transporter et qui forment avec leurs extrémités radialement extérieures situées tout près du côté intérieur de la paroi de carter un joint d'étanchéité contre les fuites d'air, étant précisé qu'il est prévu, reliées aux ailettes (4), des ailettes supplémentaires (8) qui forment des chambres secondaires (6) ouvertes radialement vers l'extérieur en direction du carter, **caractérisée en ce que** la chambre secondaire (6) se compose d'une ailette courte (7) de l'ailette (4) et de l'ailette supplémentaire (8) rapportée suivant un certain angle.

2. Vanne à roue cellulaire avec une étanchéité améliorée contre les fuites d'air, avec une roue cellulaire (1, 18) montée en rotation dans un carter et comportant des sections d'ailettes intérieures (4) qui partent d'un arbre central (13), qui s'étendent radialement vers l'extérieur, qui forment entre elles des chambres (5) destinées à recevoir le produit à transporter, des ailettes supplémentaires (10, 11) étant reliées aux sections d'ailettes intérieures (4) et ces ailettes supplémentaires (10, 11) formant des chambres secondaires (6) qui sont ouvertes radialement vers l'extérieur en direction du carter, et formant avec leurs extrémités radialement extérieures situées tout près du côté intérieur de la paroi de carter un joint d'étanchéité contre les fuites d'air, **caractérisée en ce que** la chambre secondaire (6) est formée par un profilé en U à peu près rectangulaire ou carré des ailettes supplémentaires (10, 11).

3. Vanne à roue cellulaire selon la revendication 2, **caractérisée en ce que** plusieurs chambres secondaires (6, 6') sont formées par un profilé en U à plusieurs branches (11).

4. Vanne à roue cellulaire selon l'une des revendications 1 à 3, **caractérisée en ce que** les chambres secondaires (6) sont aptes à être remplies avec la matière à transporter.

5. Vanne à roue cellulaire selon l'une des revendications 1 à 4, **caractérisée en ce que** la roue cellulaire (1, 18) forme différents volumes de chambre des chambres principales (5) et secondaires (6).

6. Vanne à roue cellulaire selon la revendication 5, **caractérisée en ce que** les volumes de chambre des chambres principales et secondaires (5, 6) sont étanches les uns par rapport aux autres.

7. Vanne à roue cellulaire selon l'une des revendications 1 à 6, **caractérisée en ce que** la roue cellulaire (1) est rendue étanche, sur chaque côté frontal, grâce à une plaque latérale (2).
